# EUROPEAN PATENT SPECIFICATION

(11) **EP 3 694 303 B1**
(45) Date of publication and mention of the grant of the patent: **29.05.2024**
(21) Application number: 18797302.9
(22) Date of filing: 12.10.2018
(51) Int. Cl.: A01D 34/90, A01D 42/00, A01D 42/06

(54) **HANDHELD TOOL FOR SINGLE-HANDED OPERATION**
HANDWERKZEUG FÜR EINHANDBEDIENUNG
OUTIL À MAIN

(30) Priority: 13.10.2017 US 201762572098 P
(43) Date of publication of application: 19.08.2020
(73) Proprietor: MTD Products Inc, Valley City, OH 44280 (US)
(72) Inventor: BRINGHURST, Cory, Valley City Ohio 44280 (US); KUCERA, Jeffrey, Medina Ohio 44256 (US)
(74) Representative: SBD IPAdmin
(86) International application number: PCT/US2018/055619
(87) International publication number: WO 2019/075333

(56) References cited:
- WO-A1-2014/119116
- WO-A1-2016/126547
- WO-A1-2017/143994
- DE-U1- 20 204 015
- JP-A- 2017 112 953
- US-A1- 2006 096 135
- US-A1- 2017 222 582

## Description

### CROSS-REFERENCE TO RELATED APPLICATION(S)

The present application claims priority to U.S. Patent Application Serial No. 16/158,576 filed October 12, 2018 which claims priority to U.S. Provisional Application Serial No. 62/572,098 filed October 13, 2017.

### FIELD OF THE INVENTION

The present invention relates to outdoor power equipment, and more particularly, to handheld tools for lawn maintenance used for trimming vegetation.

### BACKGROUND OF THE INVENTION

Handheld tools, brush cutters, edgers, hedge trimmers, and the like are often used in lawn maintenance to cut grass, weeds, or other vegetation, sometimes in locations not often easily accessible by lawn mowers. Handheld tools typically include a power source attached to one end of a boom and a working tool attached to the opposing end of the boom. The working tool includes a rotatable trimmer head having a filament or string, cutting blades, reciprocating blades, or other mechanisms that are driven by a rotatable drive shaft. Many handheld tools have a fixed-length boom that does not allow the operator to adjust the position of the working tool to an operative position that is different for each operator. Those handheld tools that have an adjustable boom typically include adjustment mechanisms that require the user to place the entire handheld tool on the ground in order to adjust the length of the boom. Because the operator is not able to hold onto the handheld tool in an operating position while adjusting the length of the boom, adjustment typically requires trial and error and multiple attempts at adjusting the length of the boom to the proper length.

Most handheld tools are configured to be operated in a pre-determined position relative to the body. For example some gas-powered handheld tools have the hot exhaust expelled from one side of the trimmer which prevents the operator from switching the trimmer from one side of the body to the other.

WO2017/143994A1 describes a string trimmer comprising a protruding rod and a handle assembly configured for an operator to operate and comprising a first handle and a second handle connected to one end of the protruding rod. DE20204015U1 describes a brush cutter with a motor and a cutting tool at opposite ends of a guide tube, which is arranged to be held at an inclined angle for an ergonomic working posture for the user. US2017/222582A1 describes an electric strimmer with a brushless motor, a rotational position sensor, a detector, and an error correction system for the rotational position sensor. WO2014/119116A1 describes an electric brush cutter with removable rechargeable batteries. WO2016/126547A1 describes a handheld lawn maintenance tool having a power head to which an adapter is attachable to allow both battery-powered and gasoline-powered working attachments to be attached thereto. US2006/096135 describes a handle having an adjustable shaft wherein the overall length of the shaft and/or the angular relationship of portions of the shaft can be varied by a user of an associated tool. JP2017 112953A describes a bush cutter with an adjustable length.

### BRIEF SUMMARY OF THE INVENTION

In one aspect of the present invention, a handheld tool is provided comprising: a power assembly having a power source operatively connected to a housing; a control assembly rotatably connected to said power assembly, said control assembly having a primary handle, a transition body extending from said primary handle, and an actuation mechanism operatively connected to said primary handle or said transition body; an elongated boom, wherein a first end of said boom is rotatably connected to said control assembly; a tool assembly operatively connected to a second distal end of said boom, said tool assembly includes a motor; and a controller electrically connected to said power source, said motor, and said actuation mechanism; wherein a length of said boom is adjustable, and said length of said boom is adjustable by a single-handed operation; and wherein said tool assembly is both movable and operable by a single-handed operation; wherein the power source is a rechargeable battery pack; and wherein the power assembly, the control assembly, and the boom form a Z-shaped design when in an operational configuration.

Advantages of the present invention will become more apparent to those skilled in the art from the following description of the embodiments of the invention which have been shown and described by way of illustration.

### BRIEF DESCRIPTION OF SEVERAL VIEWS OF THE DRAWINGS

These and other features of the present invention, and their advantages, are illustrated specifically in embodiments of the invention now to be described, by way of example, with reference to the accompanying diagrammatic drawings, in which:
FIG. 1 is an isometric view of an exemplary embodiment of a handheld tool;
FIG. 2 is a magnified view of the power assembly and control assembly;
FIG. 3 is a magnified view of the display panel displaying a plurality of feedback parameters;
FIG. 4 is a side view of the control assembly in which the secondary handle is adjustable;
FIG. 5 is the handheld tool in a stored configuration;
FIG. 6A is a schematic diagram of one embodiment of a handheld tool;
FIG. 6B is a schematic diagram of another embodiment of the handheld tool;
FIG. 7A is a cross-sectional view of the boom in a retracted position;
FIG. 7B is a cross-sectional view of the boom in an extended position;
FIG. 8 is an embodiment of a clamping assembly for a boom.

It should be noted that all the drawings are diagrammatic and not drawn to scale. Relative dimensions and proportions of parts of these figures have been shown exaggerated or reduced in size for the sake of clarity and convenience in the drawings. The same reference numbers are generally used to refer to corresponding or similar features in the different embodiments. Accordingly, the drawing(s) and description are to be regarded as illustrative in nature and not as restrictive.

### DETAILED DESCRIPTION OF THE PREFERRED EMBODIMENT

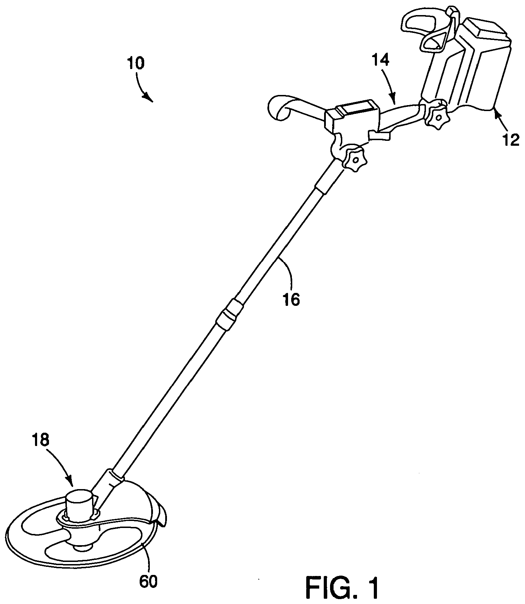

Referring to FIG. 1, an exemplary embodiment of a one-armed handheld tool 10 is shown. The handheld tool 10 is configured to cut or otherwise trim grass, weeds, and other vegetation using only a single arm of the user to operate the handheld tool 10. Handheld tools 10 are particularly useful for the ability to cut and trim vegetation in tight areas that are not easily accessible by riding or walk-behind lawn mowers. Handheld tools 10 are also useful for cutting and trimming vegetation immediately surrounding structures such as trees, mailboxes, flower beds, driveways, and the like. Handheld tools 10 can also be rotated for use as an edger to remove vegetation immediately adjacent to sidewalks, driveways, and the like. The handheld tool 10 shown in FIG. 1 is both movable and operable by a single-handed operation. The handheld tool 10 is ambidextrously controllable, wherein the user can operate the tool 10 using either hand for operation. The handheld tool 10 is also configured to expel exhaust gases away from the operator regardless of which handed-ness is being used to operate the handheld tool 10.

In an embodiment, the handheld tool 10 includes a power assembly 12, a control assembly 14, a boom 16, and a tool assembly 18, as shown in FIG. 1. The tool assembly 18 is both movable and operable by a single-handed operation, wherein the operator controls the relative movement and operation of the tool assembly by grasping a portion of the control assembly 14. The control assembly 14 is ambidextrously controllable, wherein a user can use either hand to move the control assembly 14 as well as operate the tool assembly 18 using the same hand. In an embodiment, when the handheld tool 10 is in the operational configuration, the power assembly 12, control assembly 14, and the boom 16 form a general Z-shaped design. The Z-shaped design being defined by the longitudinal axis of the power assembly 12 being somewhat aligned with the longitudinal axis of the boom 16, wherein said control assembly 14 that extends between the power assembly 12 and the boom 16 is oriented at an angle relative to both the power assembly 12 and the boom 16. The operational configuration is defined as the orientation of the power assembly 12, control assembly 14, the boom 16, and the tool assembly 18 allows the user to operate the handheld tool 10 in a working mode. In the illustrated embodiment, the length of the boom 16 is adjustable in order to allow an operator to optimize the length and rotational orientation of the tool assembly 18 relative to the control assembly 14 for better ergonomic handling and control. The power assembly 12 and control assembly 14 are mounted to an upper distal end of the boom 16, and the tool assembly 18 is mounted to the opposing lower distal end of the boom 16. In an embodiment, the boom 16 is a hollow tubular structure that allows the tool assembly 18 to be electrically and/or mechanically connected to the control assembly 14 and power assembly 12. The boom 16 extends the tool assembly 18 away from the user.

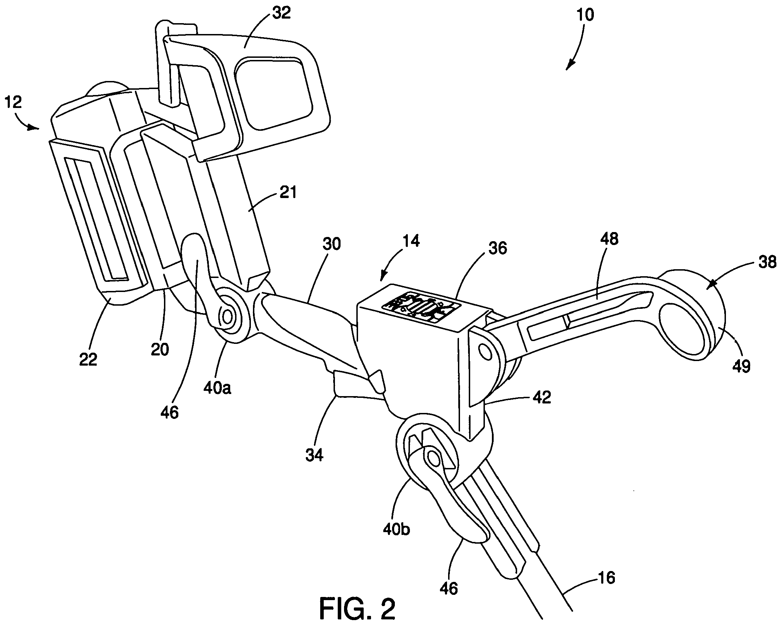

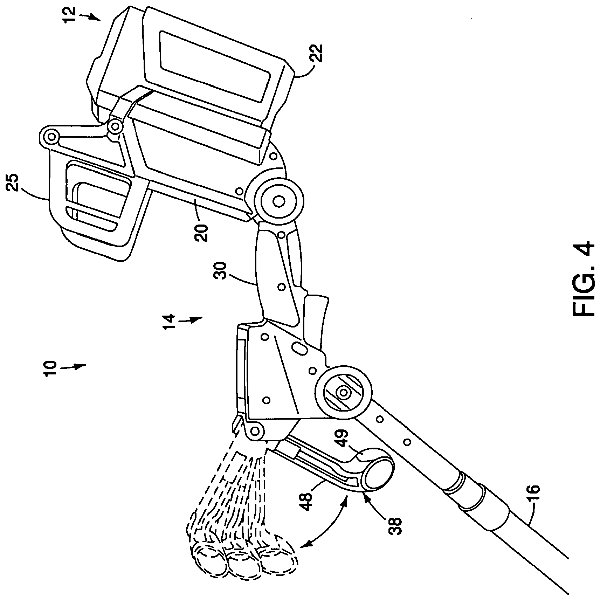

In an embodiment, the power assembly 12 of the handheld tool 10 is configured to provide electrical power to the tool assembly 18. As shown in FIG. 2 and 4, the power assembly 12 includes a housing 20 and a power source 22 removably attachable to the housing 20. In the illustrated embodiment, the power source 22 is a rechargeable battery pack. In another embodiment, the power source 22 is a "dummy" battery, which has the shape of a battery that is removably attachable to the housing 20 but is connected to an external battery or other power source by way of a cable or similar electrical connector. In a further embodiment, the power source 22 is fixedly connected to the housing 20, and a cable, wire, or other electrical connecting device operatively connects the power source 22 to an external source of electrical power. The power source 22 formed as a rechargeable battery can be any type of rechargeable battery, including but not limited a NiCd battery, a NiMH battery, a Lithium-ion battery, or the like. It should be understood by one having ordinary skill in the art that the power source 22 can include any type of rechargeable power source. In still another embodiment, the power assembly 12 includes a housing 20 having a power cord (not shown) fixedly attached to the housing 20, wherein the power cord provides electrical power to the handheld tool 10. In other embodiments, the power assembly 12 includes a power source 22 fixedly attached to the housing 20, wherein the power source 22 is an internal combustion engine (not shown) and the engine is configured to provide mechanical or rotational power to the tool assembly 18.

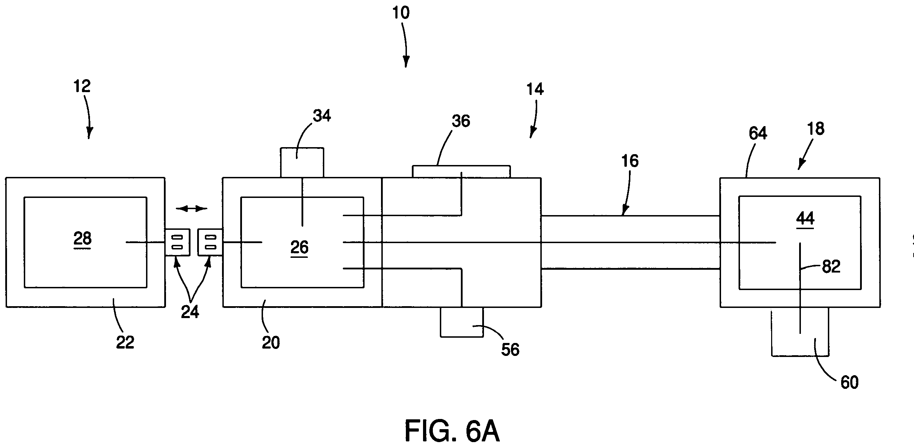

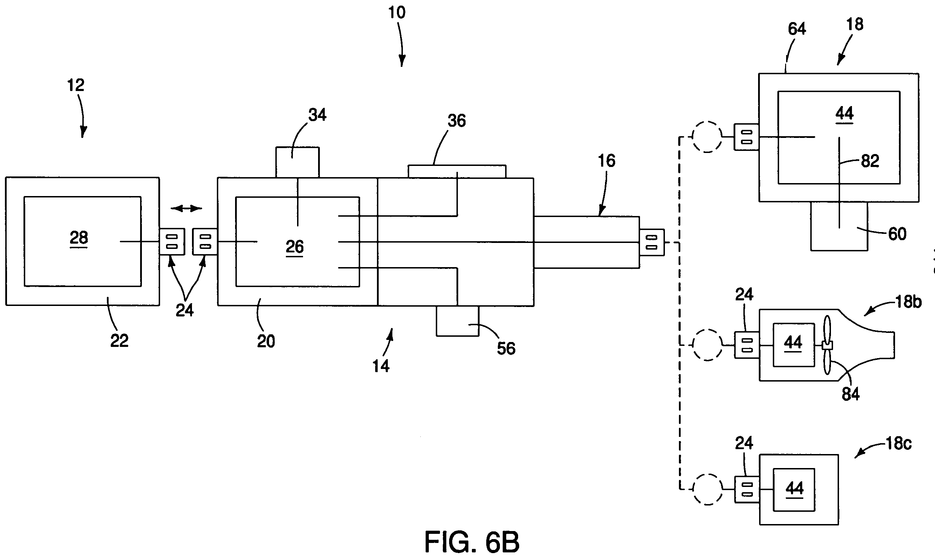

The power source 22 includes an attachment mechanism that allows the power source 22 to be removably attached to the housing 20. As shown in FIG. 6, the power source 22 further includes electrical connectors 24 that are selectively securable to corresponding electrical connectors 24 extending from the housing 20 when the power source 22 is attached to the housing 20. The electrical connectors 24 of the housing 20 are electrically connected to a controller 26 positioned within the housing 20. In an embodiment, the electrical connectors 24 of the power source 22 are electrically connected to a power generator 28 within the power source 22. It should be understood by one having ordinary skill in the art that the power generator 28 within the power source 22 can either be the cells of the battery that generate electrical power or a further electrical connector to which an external source of electrical power is attached. The connection between the electrical connectors 24 of the power source 22 and the electrical connectors 24 of the housing 20 electrically connects the power generator 28 to the controller 26.

In the illustrated embodiment, the power assembly 12 further includes a cuff 25 extending upwardly and rearwardly from the housing 20. The cuff 25 is formed as a generally cylindrical member having an opening along top to receive the forearm of the user. The cuff 25 is attached to the rear end of the housing 20 and extends rearwardly away from the top surface of the housing 20, wherein the cuff 25 provides a buffer between the arm of the user and a portion of the housing 20. The cuff 25 is formed of a flexible material to receive forearms of different sizes. The cuff 25 is further configured to couple the forearm of the user to the handheld tool 10 during operation, particularly during a lateral side-to-side sweeping motion. The cuff 25 assists in preventing the upper end of the tool 10 from rotating in the opposite direction than the lower end of the tool 10 when the user grasps the primary handle 30. In other embodiments, straps (not shown) are attached to the cuff 25 or the housing 20 for positively securing the operator's forearm within the cuff 25. In some embodiments, the general circumference of the cuff 25 is adjustable in order to provide a positive grasping fit of the forearm received therein. In other embodiments, the cuff 25 is adjustable in the fore/aft or longitudinal direction along the upper surface of the housing 20 to allow the cuff 25 to secure a user-selected position relative to the forearm.

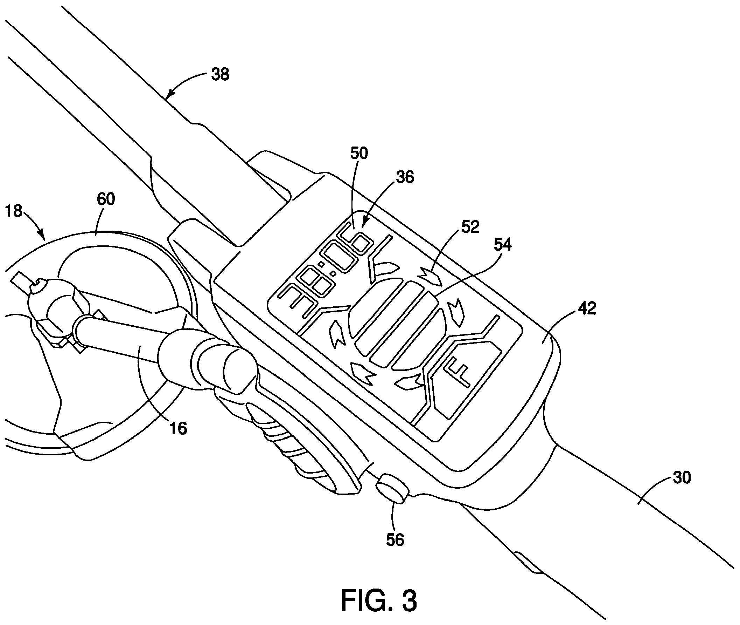

As shown in the exemplary embodiment of FIG. 6A, the controller 26 is positioned within the housing 20. In another embodiment, the controller 26 is positioned within the transition body 42 (FIG. 3). The controller 26 is configured to control the motor 44 of the tool assembly 18 in response to actuation of the actuating mechanism 34 of the control assembly 14. The controller 26 is also configured to control the information shown on the display panel 36 of the control assembly 14. The controller 26 is electrically powered by the power source 22 or other electrical power source. The controller 26 is electrically connected to the actuating mechanism 34, the motor 44, the power source 22, and a display panel 36. In an embodiment, the controller 26 receives a first output signal from the actuating mechanism 34 that represents the relative position of the actuating mechanism 34 during operation (or the stop position when not in use). The controller 26 then generates a variable second output signal that is transmitted to the motor 44 in response to the first output signal from the actuating mechanism 34. The controller 26 further receives a third output signal from the power source 22 that represents the status thereof, including but not limited to the remaining battery life and/or the load or draw on the power source 22 during operation of the handheld tool 10. The controller 26 also receives a feedback signal from the power source 22, the actuating mechanism 34, the display panel 36, and the motor 44. The controller 26 processes the first and third output signals as well as the feedback signals to generate a fourth output signal that is transmitted to the display panel 26 to provide visual feedback to the operator relating to the operation of the handheld tool 10.

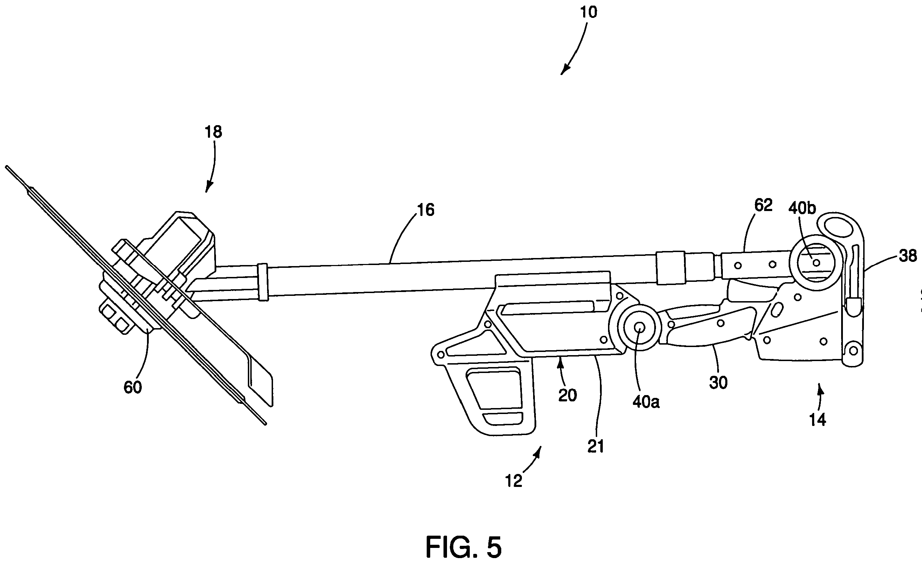

In an embodiment, the housing 20 includes a support surface 21, as shown in FIG. 2. The support surface 21 is a generally flat surface that is positioned on the top side of the housing 20 opposite the side to which the power source 22 is attached to the housing 20. The support surface 21 is configured to support the forearm of an operator during use of the handheld tool 10. In operation, the support surface 21 is oriented at an angle relative to the primary handle 30 to allow the operator to grasp and support the handheld tool 10 in an ergonomic position. The housing 20 is selectively rotatable relative to the primary handle 30 to allow the user to adjust the relative angle between the primary handle 30 and the support surface 21 to generate the most comfortable operating position for each user. When the handheld tool 10 is folded for packaging, the support surface 21 is oriented generally parallel relative to the primary handle 30 (FIG. 5) of the control assembly 14. An attachment mechanism 40 operatively connects the power assembly 12 to the control assembly 14 to allow for the adjustment of the angle therebetween for comfort. A first attachment mechanism 40a allows the power assembly 12 to be rotatable relative to the control assembly 14. The first attachment mechanism 40a also allows the power assembly 12 to be rotated relative to the control assembly 14 so as to minimize the overall space or footprint of the handheld tool 10 for packaging while also allowing the power assembly 12 to be rotatable relative to the control assembly 14 to position the support surface 21 at a comfortable and ergonomic position for the operator.

In the exemplary embodiment shown in FIG. 2, the control assembly 14 includes a primary handle 30, an actuating mechanism 34, a display panel 36, a secondary handle 38, and a transition body 42. One end of the control assembly 14 is rotatable relative to the power assembly 12 and the opposing end is rotatable relative to the boom 16. In some embodiments, the control assembly 14 further includes a direction switch 56 that controls the relative movement or rotation of the working tool 60 of the tool assembly 18. For example, when the direction switch 56 is positioned in a first operative position and a string trimmer is the tool assembly 18 attached to the opposing end of the boom 16, the working tool 60 (formed as a trimmer head, for example) of the tool assembly 18 rotates in a clockwise direction in response to pulling the actuating mechanism 34; and when the direction switch 56 is positioned in a second operative position, the working tool 60 rotates in a counter-clockwise direction in response to pulling the actuating mechanism 34. A second attachment mechanism 40b adjustably connects the control assembly 14 to the boom 16. The control assembly 14 allows an operator to grasp the handheld tool 10 with a single arm/hand and control the movement of the handheld tool 10 with ease. The boom 16 is rotatably connected to one end of the control assembly 14 and the power assembly 12 is rotatably connected to the opposing end of the control assembly 14, wherein these rotatable connections provide the operator the ability to adjust the position of the control assembly 14 relative to both the power assembly 12 and the boom 16 in order to optimize the comfort and fit of the handheld tool 10 during operation thereof.

In an embodiment, the primary handle 30 is an elongated member having an ergonomic shape that provides a comfortable grip for an operator to grasp during operation of the handheld tool 10 while resting their forearm on the support surface 21 of the housing 20, as shown in FIGS. 2-4. The primary handle 30 can be formed by an overmolding process that adds a deformable gripping surface which also aides in reducing the vibrations resulting from the operation of the motor 44 of the tool assembly 18. In other embodiments, the primary handle 30 is integrally formed with the transition body 42 using the same material. The base of the primary handle 30 is rotatably connected to the housing 20 of the power assembly 12 by a first attachment mechanism 40a, and the opposing end of the primary handle 30 is operatively connected to the transition body 42. The transition body 42 is rotatably connected to the boom 16 by a second attachment mechanism 40b which allows the control assembly 14 to be rotatable relative to the boom 16. In operation, when the operator grasps the primary handle 30, the actuator mechanism 34 is positioned at a location that is easily accessible by the index finger (or other finger) on the operator's grasping hand.

Each attachment mechanism 40 is configured to connect adjacent components of the handheld tool 10 to allow the components to be selectively rotatable relative to each other. The attachment mechanisms 40 are mechanical connectors, and the attachment mechanisms 40 can be of any type that allows adjacent components to have a solid connection while allowing the components to be selectively rotatable relative to each other. As shown in FIGS. 2 and 5, the attachment mechanisms 40 allow the handheld tool 10 to be folded into a footprint small enough to significantly reduce the size of the box or package in which the handheld tool 10 is placed for shipment and sale. In an embodiment, each attachment mechanism 40a, 40b is formed with a pin (not shown) extending between opposing lateral sides of the mechanism with an over-center cam lever attached to one end of the pin. The attachment mechanisms 40a, 40b further include opposing indexing surfaces (not shown), wherein one of the surfaces extends from the control assembly 14 and the other extends from the power assembly 12 or the boom 16. The lever is rotatable to a release position in which the opposing indexing surfaces are disengaged and rotatable relative to each other and a secured position in which the opposing indexing surfaces are positively engaged with each other to prevent rotation of the attachment mechanism 40a, 40b. It should be understood by one having ordinary skill in the art that other mechanical mechanisms that allow for selective locking and rotation of adjacent components can be used.

As shown in FIG. 2, the first attachment mechanism 40a allows the power assembly 12 to be selectively rotatably adjustable relative to the control assembly 14, thereby allowing an operator to position the housing 20 in a comfortable operating position relative to the primary handle 30. In this position, the primary handle 30 is generally perpendicular to, or at a similar angle to, the support surface 21 of the housing 20. Further, as shown in FIG. 5, the first attachment mechanism 40a allows the power assembly 12 to be rotated or folded relative to the control assembly 14 in which the support surface 21 of the housing 20 is generally parallel to the primary handle 30 such that the housing 20 and primary handle 30 are aligned. In a further embodiment (not shown), the first attachment mechanism 40a allows the power assembly to be rotated or folded relative to the control assembly 14 in which the housing 20 is generally parallel to the primary handle 30 wherein the support surface 21 of the housing 20 is in contact with (or positioned immediately adjacent to) the primary handle 30. In this position, the housing 30 is rotated nearly 180° relative to the position shown in FIG. 5.

The primary handle 30 acts as the fulcrum for the handheld tool 10, wherein the weight positioned forward of the primary handle 30 is generally the same as the weight positioned rearward of the primary handle 30. This balance of weight in which the primary handle 30 acts as the fulcrum reduces or eliminates additional stresses on the operator during a single-arm operation of the handheld tool 10. The amount of effort needed to push the tool assembly 18 downward toward the ground is reduced. In another embodiment, the forward end of the handheld tool 10 - the components located forward of the primary handle 30, including the boom 16 and the tool assembly 18 - is slightly heavier than the rear end such that the tool assembly 18 tends to be biased toward the ground or weighted forward during operation, and such biasing is countered by the operator applying slight pressure on the support surface 21 of the housing 20 by the operator's forearm.

As shown in FIGS. 2 and 4, the actuator mechanism 34 of the control assembly 14 is located beneath the primary handle 30 near the location where the primary handle 30 attaches to the transition body 42. The actuator mechanism 34 is positioned such that when the operator grasps the primary handle 30, the actuator mechanism 34 is easily accessible for actuation by the fingers of the same hand grasping the primary handle 30. In an embodiment, the actuator mechanism 34 is formed as a trigger. It should be understood by one having ordinary skill in the art that other mechanical actuator mechanisms can also be used. The actuator mechanism 34 is operatively and electrically connected to the controller 26 (FIG. 6) that is located within the housing 20 of the power assembly 12. In an alternative embodiment, the actuator mechanism 34 is operatively and electrically connected to the controller 26, wherein the controller 26 is located within the transition body 42 of the control assembly 14. The actuator mechanism 34 is operatively and electrically connected to the motor 44 of the tool assembly 18 so as to control the output rotational power from the motor 44 in response to the relative rotated position of the actuator mechanism 34.

In an embodiment, the actuator mechanism 34 is a hinged or depressible member, wherein actuation, movement, or activation of the actuator mechanism 34 results in a change in the operative condition of the motor 44. The actuator mechanism 34 has a first operative position, or stop position, in which the actuator mechanism 34 has not been moved or otherwise actuated. When the actuator mechanism 34 is in the first operative position, the motor 44 of the tool assembly 18 is in a stopped condition such that the motor 44 is not providing any output rotational power. The actuator mechanism 34 is rotatable to a second operative position, or fully actuated position, in which the actuator mechanism 34 is fully depressed. When the actuator mechanism 34 is in the second operative position, the motor 44 of the tool assembly 18 is providing the maximum output rotational power. The actuator mechanism 34 is infinitely actuatable between the first and second operative positions, which allows an operator to gradually increase or decrease the output rotational power of the motor 44 during operation. In an embodiment, the actuator mechanism 34 is rotatably attached to the primary handle 30. In another embodiment, the actuator mechanism 34 is rotatably attached to the transition body 42. In a further embodiment, the actuator mechanism 34 is rotatably attached at a location where the transition body 42 connects to the primary handle 30. In an embodiment, the transition body 42 and the primary handle 30 are integrally formed as a unitary member.

As shown in FIG. 2, the transition body 42 is positioned forward of the primary handle 30. The transition body 42 is formed as a cube or a generally cuboid member, wherein the longitudinal axis is substantially parallel to the longitudinal axis of the primary handle 30. It should be understood by one having ordinary skill in the art that the transition body 42 can be formed as any hollow shape in which a controller, electrical wires, or other components can be positioned. One end of the transition body 42 is fixedly or integrally attached to the primary handle 30 and the opposing end is attached to the boom 16 by way of the second attachment mechanism 40b. The transition body 42 receives the electrical wires for electrically coupling the controller 26 to the boom 16.

In the exemplary embodiment illustrated in FIG. 3, the display panel 36 is positioned on the upwardly-directed face of the transition body 42. The display panel 36 is configured to provide an interface for real-time feedback of the performance of the handheld tool 10, including the power source 22. The display panel 36 is configured to display a plurality of feedback parameters. As explained above and shown in FIG. 5, the display panel 36 is electrically and operatively connected to the controller 26. In an embodiment, the display panel 36 utilizes a graphic user interface (GUI) to display various feedback parameters. In an embodiment, the display panel 36 is formed as an e-ink display. In other embodiments, the display panel 36 can be formed as an LCD screen, LED screen, and it should be understood by one having ordinary skill in the art that any other type of display method or technology can be used to display the feedback parameters on the display panel 36. It should also be understood by one having ordinary skill in the art that the display panel 36 can also be user interactive using a touch-screen display in which the user can interact with the display panel 36 to adjust or modify the information shown. The display panel 36 can also be configured to receive user input to control the operation or efficiency of the handheld tool 10. For example, instead of the direction switch 56, the display panel 36 can be configured to receive user input to switch the relative rotational direction of the working tool 60. The display panel 36 can also be configured to receive user input to "boost" the output power to the tool assembly 18 such as (temporarily) boosting the speed of a trimmer head when it is being used in heavy vegetation.

In the illustrated embodiment, the display panel 36 is configured to provide at least one visual feedback parameter, as shown in FIG. 3. In an embodiment, one visual feedback parameter 50 is the estimated time remaining on the current charge of the power source 22. The estimated time remaining visual feedback parameter 50 acts as a countdown clock, wherein the estimated time remaining is calculated by and supplied by the controller 26. the estimated time remaining of the battery is calculated by a separate, second controller (not shown) that is integrated into the power source 22, wherein the second controller is provides an output signal to the controller 26 to provide the status of the power source 22 which includes the estimated time remaining. In another embodiment, another visual feedback parameter 52 is the direction of rotation of the working tool 60 of the tool assembly 18 or the direction that the motor 44 is rotating. In an embodiment, the direction of rotation visual feedback parameter 52 is a static display having arrows pointing in the direction of rotation. In another embodiment, the direction of rotation visual feedback parameter 52 is an animated display of arrows that point in the direction of rotation. In a further embodiment, another feedback parameter 54 is shown as the (electric) load level being supplied to the motor 44. In an embodiment, the load level visual feedback parameter 54 provides a real-time indication of the amp draw of the motor 44, which provides useful feedback on the load drawn by the motor 44 relative to the conditions of use of the handheld tool 10. It should be understood by one having ordinary skill in the art that the display panel 36 can provide feedback relating to the power source 22, the current parameters of the motor 44, remaining trimmer line in the trimmer head, or the like.

As shown in FIG. 4, the secondary handle 38 extends from the forward end of the transition body 42. Although the handheld tool 10 is operable in a one-handed operation, the secondary handle 38 provides the user with the ability to more easily rotate or control the handheld tool 10 in small spaces. The secondary handle 38 also allows the user the option to use both hands to operate the handheld tool 10, even though the tool 10 is balanced and weighted such that only a single hand/arm is necessary to easily control such. The secondary handle 38 is rotatable relative to the transition body 42, thereby providing a plurality of operative positions of the secondary handle 38 relative to the transition body 42. Also, as shown in FIG. 5, the secondary handle 38 is rotatable to a stored position, thereby reducing the footprint of the handheld tool 10 which allows the handheld tool 10 to be placed in a smaller box or container for shipment and sale. The secondary handle 38 includes an arm 48 that is rotatably connected to the transition body 42. The secondary handle 38 further includes a grip 49 that is integrally formed with the arm 48 to form a singular member.

In an embodiment, the transition body 42 further includes a direction switch 56 that extends laterally from opposing side surfaces of the transition body 42, as shown in FIG. 3. The direction switch 56 is an actuatable switch formed as a pair of opposing buttons, wherein only one of the buttons extends from the transition body 42 at a time. The direction switch 56 is configured to switch the direction of rotational output from the motor 44 of the tool assembly 18. For example, in the embodiment shown in FIG. 3, the button of the direction switch 56 extending from the left side of the transition body 42 indicates that the direction of rotational output from the motor 44 is in the clockwise direction (as illustrated on the display panel 36). It should be understood by one skilled in the art that this condition may alternatively indicate the direction of rotational output from the motor 44 is in the counter-clockwise direction (which would similarly be shown on the display panel 36). To switch the direction of rotational output from the motor 44, the operator depresses the button that is presently extending from the transition body 42. As a result, the opposing button of the direction switch 56 extends from the opposite side of the transition body 42, and the direction of rotational output from the motor 44 is switched to the opposite direction. It should be understood by one having ordinary skill in the art that the direction switch 56 configured to selectively and manually switch the direction of rotational output of the motor 44 can be formed as any type of mechanical or electro-mechanical switch that is operatively and electrically connected to the controller 26. The direction switch 56 is operatively and electrically connected to the controller 26 for dictating the direction of rotational output from the motor 44. The direction switch 56 is easily actuatable, and actuation of the direction switch 56 can be accomplished either when the motor 44 or when the motor 44 is rotating the working tool 60 of the tool assembly 18.

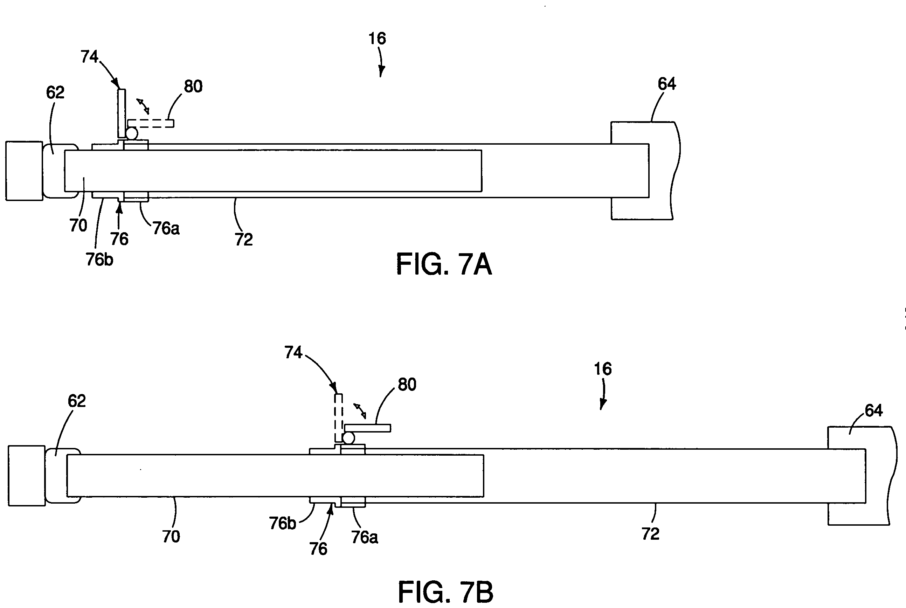

As shown in FIG. 2, the boom 16 extends from the transition body 42 of the control assembly 14. The transition body 42 includes a coupler 62 that extends from the forward end thereof, wherein the coupler 62 connects the transition body 42 to the upper distal end of the boom 16, as illustrated in FIGS. 7A-7B. The lower distal end of the boom 16 is operatively connected to the tool assembly 18. In an embodiment, the lower distal end of the boom 16 is fixedly attached to the tool assembly 18. In another embodiment, the tool assembly 18 is releasably attachable to the lower end of the boom 16. The releasable attachment between the boom 16 and the tool assembly 18 is a quick-attach mechanism that positively secures the tool assembly 18 to the boom 16 as well as electrically connects the boom 16 and the tool assembly 18. In further embodiments, the quick-attach mechanism between the tool assembly 18 and the boom 16 allows for a mechanical transfer of power therebetween when the power assembly 12 includes an internal combustion engine. In the illustrated embodiment, the length of the boom 16 is manually adjustable by the operator. The boom 16 is configured to be adjustable with a single-hand operation, wherein the operator is able to hold onto the primary handle 30 with one hand and extend or retract the length of the boom 16 with the other hand. The boom 16 is also rotatable about the longitudinal axis thereof, thereby allowing the housing 64 and motor 44 to be rotated for use as an edger, hedge trimmer, or the like. The single-handed operation of the boom 16, coupled with the simultaneous single-handed operation of the handheld tool 10, allows an operator to trim vegetation as well as adjust the length of the boom 16 and orientation of the tool assembly 18 without the need to place the handheld tool 10 on the ground. The single-handed adjustment of the length of the boom 16 also allows an operator to continue to operate the handheld tool 10 while simultaneously rotating the boom 16 and the tool assembly 18 without needing to turn off or stop the operation of the tool assembly 18. For example, the single-handed adjustment of the boom 16 allows an operator to switch the operation of the tool assembly 18 between a weed trimming position (trimmer head directed generally toward the ground) and an edging position (trimmer head directed generally perpendicular to the ground) without having to stop the rotation of the working tool 60. The length and/or rotational position of the boom 16 is adjustable with only a single-handed operation.

FIGS. 7A-7B illustrate an embodiment of the boom 16 that includes an upper tube 70, lower tube 72, and a clamping assembly 74. The upper and lower tubes 70, 72 are cylindrical members having different diameters and arranged in an overlapping manner. The clamping assembly 74 is configured to selectively engage or positively secure the upper and lower tubes 70, 72 together. In the illustrated embodiment, the upper tube 70 is attached to the coupler 62 extending from the transition body 42 of the control assembly 14. The upper tube 70 has a smaller diameter than the lower tube 72 such that the lower tube 72 surrounds a portion of the upper tube 70. During the extension and retraction of the length of the boom 16, the upper tube 70 remains fixed while the lower tube 72 slides over the outer surface of the upper tube 70. Although the boom 16 shown in FIGS. 7A-7B shows a small gap between the upper and lower tubes 70, 72, but it should be understood by one having ordinary skill in the art that the lower tube 72 contacts the portion of the upper tube 70 positioned therewithin. The smaller upper tube 70 allows the length of the boom 16 to be adjusted by sliding the lower boom 72 relative to the fixed upper boom 70. Because the lower tube 72 is adjustable relative to the upper tube 70, the clamping assembly 74 for positively connecting the lower tube 72 to the upper tube 70 is positioned within reach of the operator's free hand when the controlling hand is grasping the primary handle 30.

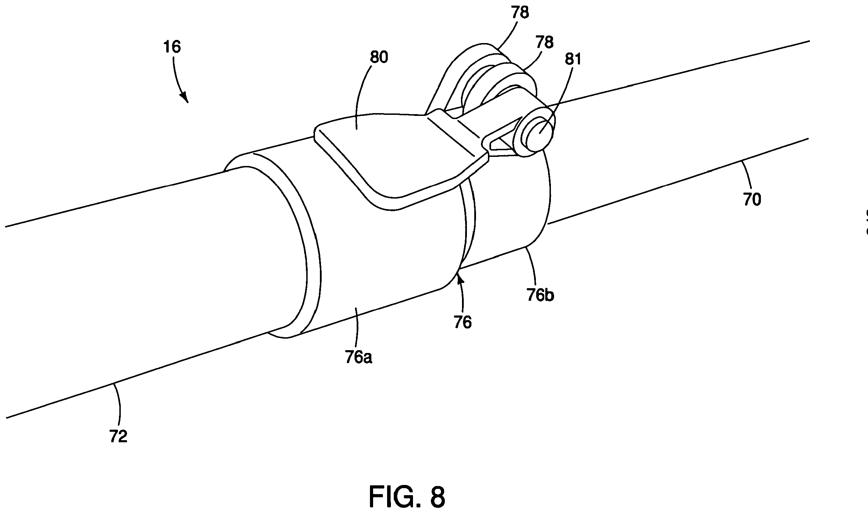

An embodiment of the clamping assembly 74 for selectively and positively connecting the upper and lower tubes 70, 72 is shown in FIG. 8A. The clamping assembly 74 includes a sheath 76 that is connected to the end of the lower tube 72. The sheath 76 includes a lower portion 76a that surrounds and fixedly attached to a portion of the outer surface of the lower tube 72 and an upper portion 76b that surrounds a portion of the upper tube 70. As the lower tube 72 slides relative to the upper tube 70 when adjusting the length of the boom 16, the upper portion 76b of the sheath 76 slides along the outer surface of the upper tube 70. The sheath 76 stabilizes the concentric relationship between the upper and lower tubes 70, 72.

In the embodiment illustrated in FIG. 8A, the sheath 76 of the clamping assembly 74 further includes a pair of spaced-apart knobs 78 that are positioned immediately adjacent to each other and formed on the upper portion 76b of the sheath 76. A quick-release lever 80 is positioned outward relative to each of the knobs 78, wherein the lever 80 is connected to a pin 81 that extends through an aperture formed in each of the knobs 78. The lever 80 is configured to be rotatable between a locked position and a released position. The lever 80 extends from the knobs 78 in a direction parallel to the longitudinal axis of the boom 16. The lever 80 has a width that is sufficient to be accessed and actuated between the locked position and the unlocked position regardless of which hand is being used to grasp the primary handle 30. When the lever 80 is in the locked position, the knobs 78 are biased toward each other thereby reducing the diameter of the upper portion 76a of the sheath 76 and frictionally engaging and securing the lower tube 72 to the upper tube 70. When the lever 80 is rotated to the unlocked position, the knobs 78 are released and spread apart from each other enough such that the sheath 76 disengages from the outer surface of the upper tube 70 to allow the lower tube 72 to be adjusted relative to the upper tube 70. In another embodiment, the quick-release lever 80 is formed of a pair of opposing arms, wherein each arm is attached to an opposing distal end of the pin that extends through the knobs 78. Rotation of either of the arms causes the other arm to similarly rotate.

In another embodiment, the upper tube 70 includes a plurality of locating holes formed along the length thereof. The sheath 76 includes a spring-biased pin that is biased into the locating holes. The pin is operatively connected to a button that, when depressed, pulls the pin away from insertion into a locating hole which allows the lower tube 72 to be adjusted relative to the upper tube 70. Once the desired relative position of the upper and lower tubes 70, 72 is achieved the button is released and the pin is biased into the locating hole for positively engaging and securing the lower tube 72 to the upper tube 70. The release button is also actuatable by a single hand, thereby allowing the operator to maintain one hand on the primary handle 30 while simultaneously adjusting the length and rotational orientation of the boom 16 with the other hand.

As shown in FIGS. 1 and 6A, the tool assembly 18 is fixedly attached to the distal end of the lower tube 72 of the boom 16. In an embodiment, the tool assembly 18 includes a motor 44 located within a housing 64, wherein the housing 64 is fixedly attached to the lower tube 72 and the motor 44 is configured to rotate a working tool 60 operatively connected thereto. In embodiments in which the lower tube 72 is only slidably adjustable relative to the upper tube 70 (such that the lower tube 72 is not rotatable relative to the upper tube 70), the tool assembly 18 is rotatably connected to the boom 16 to allow the rotational orientation of the tool assembly 18 to be adjustable relative to the boom 16. The motor 44 is an electric motor that is electrically connected to the controller 26. In the embodiment illustrated in FIG. 6A, at least one wire electrically connects the motor 44 to the controller 26 which is, in turn, electrically connected to the power generator 28. The motor 44 includes a drive shaft 82 that extends from the housing 64, wherein the motor 44 rotates the drive shaft 82 in either the clockwise or counter-clockwise direction. The motor 44 is operatively connected to the actuating mechanism 34, wherein the actuating mechanism 34 starts and stops the motor 44 driving the drive shaft 82 as well as adjusts the output rotational speed of the drive shaft 82 in response to actuation of the actuating mechanism 34. The motor 44 is also operatively connected to the display panel 36, wherein the motor 44 generates an output signal to indicate the feedback parameters relating to the direction of rotation of the drive shaft 82, the amp load drawn by the motor 44, and the rotational direction of the drive shaft 82.

In the illustrated embodiment of FIG. 6A, the tool assembly 18 includes a working tool 60 removably attachable to the drive shaft 82 extending from the motor 44. In an embodiment, the working tool 60 is a flexible trimmer line trimmer head. In another embodiment, the working tool 60 is an edging head having cutting blades extending therefrom. In a further embodiment, the working tool 60 is a fixed-line trimmer head. It should be understood by one having ordinary skill in the art that the working tool 60 can be any outdoor tool that can be driven by a rotatable drive shaft 82.

In the embodiment illustrated in FIG. 6B, the tool assembly 18 is releasably attachable to the distal end of the boom 16. The boom 16 and the tool assembly 18 include cooperating ends of a mechanical connector (not shown) that allows for a quick-release mechanical connection. The boom 16 and the tool assembly 18 also include electrical connectors 24 that cooperate when the tool assembly 18 is attached to the boom, wherein the electrical connectors electrically connect the controller 26 to the motor 44 of the tool assembly 18. The releasable connection between the tool assembly 18 and the boom 16 allows a user to switch between a string trimmer tool assembly 18a, a blower tool assembly 18b, or another tool assembly 18c that can be formed as a polesaw, tiller/cultivator, hedge trimmer, edger, brush/sweeper, or any other garden implement that can be operated using the handheld tool 10. In an embodiment, the blower tool assembly 18b includes a motor 44 electrically connected to the electrical connector 24. The motor 44 is positioned within the housing 60 and drives a fan 84 that generates the air flow that exits the housing in a blower application.

In operating the handheld tool 10, the operator grasps the primary handle 30 with one hand and rests the forearm on the support surface 21 of the housing 20. The handheld tool 10 is configured to be ambidextrous, which allows the operator to operate the trimmer using either hand and positioning the tool 10 on either side of the body. The operator has the option of grasping the grip 49 of the secondary handle for additional or finer control the handheld tool 10. With a charged power source 22 connected to the housing 20, the operator pulls on the actuating mechanism 34 which causes the motor 44 to rotate the drive shaft 82 and begins operation of the working tool 60. While the actuating mechanism 34 is being actuated, the display panel 36 displays a plurality of feedback parameters for the operator. To stop the operation of the handheld tool 10, the operator releases the actuating mechanism 34 which turns off the motor 44 and ceases rotation of the drive shaft 82 and the working tool 60.

While preferred embodiments of the present invention have been described, it should be understood that the present invention is not so limited and modifications may be made without departing from the present invention. The scope of the present invention is defined by the appended claims.

## Claims

1. A handheld tool comprising:
a power assembly (12) having a power source (22) operatively connected to a housing (20);
a control assembly (14) rotatably connected to said power assembly (12), said control assembly having a primary handle (30), a transition body (42) extending from said primary handle, and an actuation mechanism (34) operatively connected to said primary handle (30) or said transition body (42);
an elongated boom (16), wherein a first end of said boom is rotatably connected to said control assembly (14);
a tool assembly (18) operatively connected to a second distal end of said boom (16) , said tool assembly includes a motor (44); and
a controller (26) electrically connected to said power source (22), said motor (44), and said actuation mechanism (34);
wherein a length of said boom (16) is adjustable, and said length of said boom is adjustable by a single-handed operation; and
wherein said tool assembly (18) is both movable and operable by a single-handed operation;
wherein the power source (22) is a rechargeable battery pack; and
wherein the power assembly (12), the control assembly (14), and the boom (16) form a Z-shaped design when in an operational configuration.

2. The handheld tool of Claim 1, wherein a rotational orientation of said boom (16) is adjustable in a single-handed operation.

3. The handheld tool of Claim 1 or Claim 2, wherein said boom (16) includes an upper tube (70) fixedly connected to said control assembly (14) and a lower tube (72) operatively connected to said tool assembly (18).

4. The handheld tool of Claim 2, wherein said boom (16) further includes a sheath (76) fixedly attached to said lower tube (72), said sheath having a clamping assembly (74) for selectively and positively securing said lower tube (72) to said upper tube (70).

5. The handheld tool of any preceding claim, wherein said actuation mechanism (34) is operatively connected to said motor (44) of said tool assembly, wherein actuation of said actuation mechanism (34) causes said motor (44) to generate a rotational output.

6. The handheld tool of any preceding claim, wherein said control assembly (14) further includes a display panel (36) that is operatively and electrically connected to said controller (26), said display panel (36) displays a plurality of feedback parameters provided by said controller.

7. The handheld tool of Claim 6, wherein said display panel (36) is formed as an e-ink screen, an LCD screen, or an LED screen to display said feedback parameters.

8. The handheld tool of any preceding claim, wherein said power source (22) is formed as a rechargeable battery releasably attachable to said housing (20).

9. The handheld tool of any preceding claim, wherein said control assembly (14) includes a secondary handle (38) extending from said transition body (42).

## Patentansprüche

1. Handwerkzeug, umfassend:
eine Leistungsanordnung (12), die eine Leistungsquelle (22) aufweist, die mit einem Gehäuse (20) wirkverbunden ist;
eine Steueranordnung (14), die drehbar mit der Leistungsanordnung (12) verbunden ist, wobei die Steueranordnung einen primären Griff (30), einen Übergangskörper (42), der sich von dem primären Griff erstreckt, und einen Betätigungsmechanismus (34) aufweist, der mit dem primären Griff (30) oder dem Übergangskörper (42) wirkverbunden ist;
einen länglichen Ausleger (16), wobei ein erstes Ende des Auslegers drehbar mit der Steueranordnung (14) verbunden ist;
eine Werkzeuganordnung (18), die mit einem zweiten distalen Ende des Auslegers (16) wirkverbunden ist, wobei die Werkzeuganordnung einen Motor (44) beinhaltet; und
eine Steuereinheit (26), die elektrisch mit der Leistungsquelle (22), dem Motor (44) und dem Betätigungsmechanismus (34) verbunden ist;
wobei eine Länge des Auslegers (16) einstellbar ist, und die Länge des Auslegers durch eine Einhandbedienung einstellbar ist; und
wobei die Werkzeuganordnung (18) sowohl beweglich als auch durch Einhandbedienung bedienbar ist;
wobei die Leistungsquelle (22) ein wiederaufladbarer Batteriepack ist; und
wobei die Leistungsanordnung (12), die Steueranordnung (14) und der Ausleger (16) in einer Betriebskonfiguration eine Z-förmige Ausgestaltung bilden.

2. Handwerkzeug nach Anspruch 1, wobei eine Drehausrichtung des Auslegers (16) in einer Einhandbedienung einstellbar ist.

3. Handwerkzeug nach Anspruch 1 oder Anspruch 2, wobei der Ausleger (16) ein oberes Rohr (70), das fest mit der Steueranordnung (14) verbunden ist, und ein unteres Rohr (72), das mit der Werkzeuganordnung (18) wirkverbunden ist, beinhaltet.

4. Handwerkzeug nach Anspruch 2, wobei der Ausleger (16) weiter eine Hülse (76) beinhaltet, die fest an dem unteren Rohr (72) befestigt ist, wobei die Hülse eine Klemmanordnung (74) zum selektiven und formschlüssigen Sichern des unteren Rohrs (72) an dem oberen Rohr (70) aufweist.

5. Handwerkzeug nach einem vorstehenden Anspruch, wobei der Betätigungsmechanismus (34) mit dem Motor (44) der Werkzeuganordnung wirkverbunden ist, wobei die Betätigung des Betätigungsmechanismus (34) bewirkt, dass der Motor (44) eine drehbare Ausgabe erzeugt.

6. Handwerkzeug nach einem vorstehenden Anspruch, wobei die Steueranordnung (14) weiter eine Anzeigetafel (36) umfasst, die funktionell und elektrisch mit der Steuereinheit (26) verbunden ist, wobei die Anzeigetafel (36) eine Vielzahl von Rückkopplungsparametern anzeigt, die von der Steuereinheit bereitgestellt werden.

7. Handwerkzeug nach Anspruch 6, wobei die Anzeigetafel (36) als ein E-Ink-Bildschirm, ein LCD-Bildschirm oder ein LED-Bildschirm ausgebildet ist, um die Rückkopplungsparameter anzuzeigen.

8. Handwerkzeug nach einem vorstehenden Anspruch, wobei die Leistungsquelle (22) als eine wiederaufladbare Batterie ausgebildet ist, die lösbar an dem Gehäuse (20) befestigbar ist.

9. Handwerkzeug nach einem vorstehenden Anspruch, wobei die Steueranordnung (14) einen sekundären Griff (38) beinhaltet, der sich von dem Übergangskörper (42) erstreckt.

## Revendications

1. Outil portatif comprenant :
un ensemble d'énergie (12) présentant une source d'énergie (22) raccordée de manière fonctionnelle à un boîtier (20) ;
un ensemble de commande (14) raccordé de manière rotative audit ensemble d'énergie (12), ledit ensemble de commande présentant une poignée principale (30), un corps de transition (42) s'étendant depuis ladite poignée principale, et un mécanisme d'actionnement (34) raccordé de manière fonctionnelle à ladite poignée principale (30) ou audit corps de transition (42) ;
une flèche allongée (16), dans lequel une première extrémité de ladite flèche est raccordée de manière rotative audit ensemble de commande (14) ;
un ensemble outil (18) raccordé de manière fonctionnelle à une seconde extrémité distale de ladite flèche (16), ledit ensemble outil inclut un moteur (44) ; et
un dispositif de commande (26) raccordé électriquement à ladite source d'énergie (22), audit moteur (44) et audit mécanisme d'actionnement (34) ;
dans lequel une longueur de ladite flèche (16) est réglable et ladite longueur de ladite flèche est réglable par une opération d'une seule main ; et
dans lequel ledit ensemble outil (18) est à la fois mobile et utilisable d'une seule main ;
dans lequel la source d'énergie (22) est un bloc-batterie rechargeable ; et
dans lequel l'ensemble d'énergie (12), l'ensemble de commande (14) et la flèche (16) forment une conception en forme de Z lorsqu'ils sont dans une configuration fonctionnelle.

2. Outil portatif selon la revendication 1, dans lequel une orientation de rotation de ladite flèche (16) est réglable d'une seule main.

3. Outil portatif selon la revendication 1 ou la revendication 2, dans lequel ladite flèche (16) inclut un tube supérieur (70) raccordé à demeure audit ensemble de commande (14) et un tube inférieur (72) raccordé de manière fonctionnelle audit ensemble outil (18).

4. Outil portatif selon la revendication 2, dans lequel ladite flèche (16) inclut en outre une gaine (76) fixée à demeure audit tube inférieur (72), ladite gaine présentant un ensemble de serrage (74) pour fixer de manière sélective et positive ledit tube inférieur (72) audit tube supérieur (70).

5. Outil portatif selon une quelconque revendication précédente, dans lequel ledit mécanisme d'actionnement (34) est raccordé de manière fonctionnelle audit moteur (44) dudit ensemble outil, dans lequel l'actionnement dudit mécanisme d'actionnement (34) amène ledit moteur (44) à générer une sortie de rotation.

6. Outil portatif selon une quelconque revendication précédente, dans lequel ledit ensemble de commande (14) inclut en outre un panneau d'affichage (36) qui est raccordé de manière fonctionnelle et électrique audit dispositif de commande (26), ledit panneau d'affichage (36) affiche une pluralité de paramètres de rétroaction fournis par ledit dispositif de commande.

7. Outil portatif selon la revendication 6, dans lequel ledit panneau d'affichage (36) est formé sous la forme d'un écran à encre électronique, d'un écran LCD ou d'un écran LED pour afficher lesdits paramètres de rétroaction.

8. Outil portatif selon une quelconque revendication précédente, dans lequel ladite source d'énergie (22) est formée sous la forme d'une batterie rechargeable pouvant être fixée de manière amovible audit boîtier (20).

9. Outil portatif selon une quelconque revendication précédente, dans lequel ledit ensemble de commande (14) inclut une poignée secondaire (38) s'étendant depuis ledit corps de transition (42).
